Europäisches Patentamt

European Patent Office

Office européen des brevets

(11) Veröffentlichungsnummer: **0 358 210**
**A2**

(12) **EUROPÄISCHE PATENTANMELDUNG**

(21) Anmeldenummer: 89116503.7

(51) Int. Cl.5: **F16J 15/32**

(22) Anmeldetag: 07.09.89

(30) Priorität: 09.09.88 DE 3830711

(43) Veröffentlichungstag der Anmeldung:
14.03.90 Patentblatt 90/11

(84) Benannte Vertragsstaaten:
AT DE ES FR GB IT

(71) Anmelder: Kaco GmbH + Co.
Rosenbergstrasse 22
D-7100 Heilbronn(DE)

(72) Erfinder: Bucher, Hans, Dipl.Ing.(FH)
Buchenweg 3
D-7101 Obergruppenbach(DE)

(74) Vertreter: Jackisch-Kohl, Anna-Katharina et al
Patentanwälte Jackisch-Kohl & Kohl
Stuttgarter Strasse 115
D-7000 Stuttgart 30(DE)

(54) **Dichtring.**

(57) Bei Dichtringen besteht das Problem, daß der Dichtabschnitt mit der Dichtlippe durch unsachgemäßes Aufschieben auf die Welle umgestülpt wird. Dies wird häufig bei der Montage nicht erkannt. Der Dichtring soll darum so ausgebildet sein, daß mit absoluter Sicherheit festgestellt werden kann, ob er falsch montiert ist.

Am Dichtabschnitt des Dichtrings ist mindestens ein Durchgang vorgesehen. Wird dieser Dichtring unsachgemäß montiert und dabei der Dichtabschnitt umgestülpt, dann liegt der Dichtring nicht über seinen Umfang dichtend an der Welle an, sondern hat im Bereich des Durchganges Abstand von der Welle. Bei einer anschließenden Dichtheitsprüfung mittels Druckluft kann diese durch diesen Durchgang strömen, so daß zuverlässig die falsche Montage des Dichtringes erkannt werden kann.

Der Dichtring kann zum Abdichten von Wellen oder Standen verwendet werden.

Fig. 1

# Dichtring

Die Erfindung betrifft einen Dichtring nach dem Oberbegriff des Anspruches 1.

Bei einem bekannten Radialwellendichtring dieser Art ist die Außenseite des Dichtabschnittes zylindrisch ausgebildet und hat eine Ringnut, in der eine Feder liegt. Bei der Montage von Aggregaten, wie Getrieben, kommt es trotz Beachtung aller erforderlichen Vorkehrungen immer wieder vor, daß der Dichtabschnitt mit der Dichtlippe des Radialwellendichtringes durch unsachgemäßes Aufschieben auf Wellen umgestülpt wird. In diesem Fall liegt der Dichtabschnitt mit seiner radialen Stirnseite oder sogar mit seiner Außenseite oftmals partiell an der Welle satt und dicht an. Bei der nach der Montage vorgenommenen Dichtheitsprüfung mit Druckluft baut sich dadurch ein Druck auf, wodurch eine ordnungsgemäße Montage des Dichtringes vorgetäuscht wird.

Der Erfindung liegt die Aufgabe zugrunde, einen Dichtring dieser Art so auszubilden, daß mit absoluter Sicherheit festgestellt werden kann, ob der Dichtring falsch montiert ist.

Diese Aufgabe wird bei einem Dichtring der gattungsbildenden Art erfindungsgemäß mit den kennzeichnenden Merkmalen des Anspruches 1 gelöst.

Infolge der erfindungsgemäßen Ausbildung gelangt bei unsachgemäßer Montage, bei der der Dichtabschnitt umgestülpt wird, seine Außen- bzw. Stirnseite nach innen und liegt dann an der Welle an. Durch die erfindungsgemäße Ausbildung liegt jedoch die Außenseite nicht, wie bei den bekannten Dichtringen, satt an der Welle an, sondern hat im Bereich des Durchganges mindestens partiell Abstand von der Welle. Durch diesen Durchgang oder Kanal strömt dann bei der anschließenden Dichtheitsprüfung die Druckluft. Am Durchgang wird bei der Druckbeaufschlagung der Dichtheitsprüfung ein gezielter Undichtheitsweg geschaffen, der sofort und einwandfrei anzeigt, daß der Dichtring unsachgemäß montiert ist.

Weitere Merkmale der Erfindung ergeben sich aus den weiteren Ansprüchen, der Beschreibung und der Zeichnung.

Die Erfindung wird nachstehend anhand eines in der Zeichnung dargestellten Ausführungsbeispieles näher beschrieben. Es zeigt:

Fig. 1 einen Teil eines erfindungsgemäßen Radialwellendicht ringes im Axialschnitt,
Fig. 2 eine Ansicht gemäß Pfeil X in Fig. 1,
Fig. 3 eine Ansicht gemäß Pfeil Y in Fig. 1.

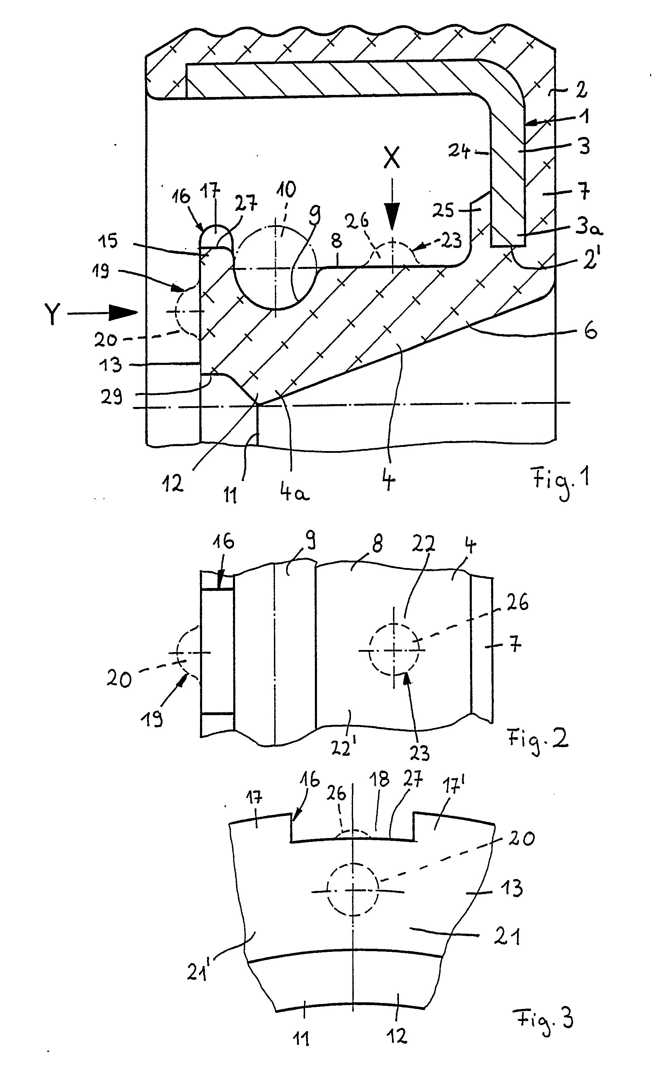

Der Radialwellendichtring nach Fig. 1 weist einen napfförmigen Stützkörper 1 mit einer zentralen Öffnung 2, auf, der teilweise mit einer Ummantelung 2 versehen ist. Sie geht am Boden 3 des Stützkörpers 1 in einen radial inneren, im wesentlichen zylindrischen Dichtabschnitt 4 über. Er verdickt sich in Richtung auf sein freies Ende 4 a, das in bekannter Weise mit einer Dichtlippe 12 versehen ist.

Der Dichtabschnitt 4 weist an seiner zylindrischen Außenseite 8 eine im Querschnitt teilkreisförmige umlaufende Nut 9 auf, in der eine Ringfeder 10 liegt. Die Nut 9 liegt der Dichtlippe 12 radial gegenüber, die mit einer Dichtkante 11 auf der abzudichtenden Welle aufliegt. Die Dichtlippe 12 hat vorzugweise etwa dreieckigen Querschnitt. Der Dichtabschnitt 4 hat eine im wesentlichen ebene, in einer Radialebene liegende Stirnseite 13.

Der Radialwellendichtring wird bei der Montage auf die abzudichtende Welle aufgeschoben, wobei der Dichtabschnitt 4 geringfügig elastisch aufgeweitet wird, so daß seine Dichtlippe 12 mit radialer Vorspannung an der Welle anliegt. Beim Aufschieben der bekannten Dichtringe kommt es immer wieder vor, daß der Dichtabschnitt 4 umgestülpt wird, so daß nicht die Dichtlippe 12, sondern ein die Nut 9 axial begrenzender und in der Stirnseite 13 des Dichtabschnittes liegender Ringabschnitt 15 mit seiner Außenseite 8 auf der Welle aufliegt.

Wird der Dichtring an einer nicht einsehbaren Stelle eingebaut, dann wird die nicht ordnungsgemäße Einbaulage auch nicht optisch erkannt. Nun wird nach dem Einbau des Dichtringes eine Dichtprüfung vorgenommen, bei der Druckluft gegen den Abdichtbereich geblasen wird. Ist eine einwandfreie Abdichtung gegeben, macht sich dies durch einen entsprechenden Druckwert bemerkbar, der mit einem entsprechenden Dichtprüfgerät gemessen wird. Bei einer solchen Dichtprüfung wird davon ausgegangen, daß bei einem falsch montierten Dichtring Undichtigkeiten auftreten, die zu einem entsprechenden Druckabfall bei der Dichtheitsprüfung führen. Es hat sich in der Praxis gezeigt, daß mit einer Dichtheitsprüfung ein umgestülpter Dichtabschnitt nicht festgestellt werden kann, weil der Ringabschnitt 15 mit seiner Außenseite ebenso wie eine Dichtlippe dichtend an der Welle anliegt. Bei der beschriebenen Dichtheitsprüfung wird dann ein ordnungsgemäß montierter Dichtring vorgetäuscht.

Um auch einen umgestülpten Dichtabschnitt bei der Dichtheitsprüfung zuverlässig feststellen zu können, ist der Ringabschnitt 15 des erfindungsgemäßen Dichtringes mit einer Profilierung 16 versehen. Sie verläuft vorzugsweise in Umfangsrichtung wellen- oder mäanderförmig (Fig. 3), so daß Erhebungen 17, 17' und zwischen ihnen Vertiefungen 18 gebildet werden. Sie bilden Durchgänge, durch die bei der Dichtheitsprüfung die Druckluft strömen kann, wenn der Dichtabschnitt 4 umgestülpt sein sollte und mit seiner Außenseite 8 an der Welle anliegt.

Die Erhebungen 17 haben im Axialschnitt etwa teilkreisförmigen Querschnitt (Fig. 1) mit einer abgerundeten Auflageseite.

Anstelle der Profilierung 16 kann der Dichtabschnitt 4 am Ringbereich 15 auch beispielsweise eine etwa axial verlaufende Erhebung haben, die bei umgestülptem Dichtabschnitt an der Welle anliegt. Dann ist im Bereich neben der Erhebung ein Durchgang gebildet, durch den bei der Dichtheitsprüfung die Druckluft strömen kann. Es können aber auch zwei Durchgänge vorgesehen sein, die zwischen mit Abstand voneinander vorgesehenen Erhöhungen gebildet sind. Sie können in verschiedenster Weise am Umfang des Ringabschnittes 15 verteilt angeordnet sein. Beispielsweise können sie einander diametral gegenüberliegen, oder es können drei oder mehr, vorzugsweise vier gleichmäßig verteilt angeordnete Erhebungen vorgesehen sein. Bei unsachgemäß montiertem Dichtring, bei dem der Dichtabschnitt bzw. seine Dichtlippe 12 nach innen gestülpt ist, liegen die Erhebungen an der Welle an. Dadurch sind zwischen dem Dichtabschnitt und der Welle Durchgänge gebildet, durch die bei der nachfolgenden Dichtprüfung Luft gelangen kann.

Wie in den Fig. 1 bis 3 mit gestrichelten Linien dargestellt ist, kann zusätzlich zur Profilierung 16 mittig an der Stirnseite 13 wenigstens eine weitere Profilierung 19 vorgesehen sein. Sie ist vorzugsweise durch etwa halbkugelförmige Erhebungen 20 gebildet, die vorzugsweise mit gleichem umfangseitigem Abstand hintereinander liegen. Zwischen den Erhebungen sind Durchgänge 21, 21′ gebildet. Die Erhebungen 20 liegen mittig zur Stirnseite 13 und sind etwa gleich hoch wie die Erhebungen 17 der Profilierung 16.

Die Erhebungen 20 und die Durchgänge 21, 21′ werden dann wirksam, wenn der Dichtabschnitt 4 nur so weit umgestülpt wird, daß er mit seiner Stirnseite 13 auf der Welle aufliegt. Bei den herkömmlichen Dichtringen würde die Stirnseite wiederum dichtend auf der Welle aufliegen und bei der Dichtheitsprüfung einen ordnungsgemäß montierten Dichtring vortäuschen. Infolge der Erhebungen 20 wird in einem solchen Fall eine dichte Anlage der Stirnseite 13 über den gesamten Umfang ausgeschlossen. Bei der Dichtheitsprüfung strömt die Druckluft durch die Durchgänge 21, 21′ zwischen den Erhebungen 20, so daß ein falsch montierter Dichtring einwandfrei erkannt wird.

Die Erhebungen 20 können zusätzlich zu den Erhebungen 17 vorgesehen sein, so daß beide Arten von Falschmontage einwandfrei festgestellt werden können. Sollte ein vollständiges Umstülpen des Dichtabschnittes 4 ausgeschlossen sein, dann reicht es aus, nur die Erhebungen 20 vorzusehen, die im übrigen jede geeignete Form haben können.

Wie die Fig. 1 bis 3 weiter zeigen, können weitere Erhebungen 26 zwischen der Nut 9 und dem Boden 3 an der Außenseite 8 des Dichtabschnittes 4 vorgesehen sein. Es hat sich gezeigt, daß der Dichtabschnitt 4 bei unsachgemäßem Einbau des Dichtringes so weit umgestülpt werden kann, daß er mit seiner Außenseite 8 an der Wellenoberfläche zur Anlage kommt. Zwischen den Erhebungen 23 sind Durchgänge 22, 22′ gebildet (Fig. 2), die zusammen mit den Erhebungen eine Profilierung 23 bilden. Sie ist vorzugsweise gleich ausgebildet wie die Profilierung 19. Die Erhebungen 23 sind durch halbkugelförmige Noppen 26 gebildet, die vorzugsweise gleichen umfangsseitigen Abstand voneinander haben. Die Profilierung 23 liegt mittig zwischen der Ringfeder 10 und einem die Innenseite 24 des Bodens 3 an dessen freiem Ende 3a umgebenden radial verlaufenden Steg 25 der Ummantelung 2.

Es genügt zum Nachweis einer unrichtigen Montage des Dichtringes auch, anstelle der Profilierungen 19, 23 nur einen oder wenige mit umfangseitigem Abstand hintereinanderliegende Erhebungen 20, 26 vorzusehen, um bei umgestülptem Dichtabschnitt 4 Durchgänge für die zur Prüfung aufgebrachte Druckluft zu schaffen.

Die Profilierungen 16, 19, 23 können gemeinsam, oder jeweils für sich, oder es können auch jeweils nur zwei der Profilierungen vorgesehen sein. Vorteilhaft ist jedoch stets die Profilierung 16 vorhanden.

Die beschriebene Ausbildung des Dichtringes mit den Profilierungen 16, 19, 23 eignet sich nicht nur für Radialwellendichtringe, sondern auch für Hutmanschetten.

## Ansprüche

1. Dichtring insbesondere Radialwellendichtring, mit einem radial inneren, elastisch verformbaren Dichtabschnitt, der etwa axial von einem Boden des Dichtringes absteht und an seinem Innenmantel mindestens eine Dichtlippe hat, dadurch gekennzeichnet, daß am Dichtabschnitt (4) mindestens ein Durchgang (18; 21, 21′; 22, 22′) vorgesehen ist.

2. Dichtring nach Anspruch 1, dadurch gekennzeichnet, daß mehrere in Umfangsrichtung des Dichtringes mit vorzugsweise gleichem Abstand hintereinanderliegende Durchgänge (18; 21, 21′; 22, 22′) vorgesehen sind.

3. Dichtring nach Anspruch 1 oder 2, dadurch gekennzeichnet, daß der Durchgang (18) durch die Vertiefung einer Profilierung (16) der Außenseite (8) des Dichtabschnittes (4) gebildet ist.

4. Dichtring nach einem der Ansprüche 1 bis 3, dadurch gekennzeichnet, daß die Profilierung (16) wellenförmig ausgebildet ist.

5. Dichtring nach einem der Ansprüche 1 bis 4, bei dem der Dichtabschnitt eine Stirnseite und an seiner Außenseite eine umlaufende Nut hat, in der eine Ringfeder angeordnet ist, dadurch gekennzeichnet, daß der oder die Durchgänge (18) im Bereich zwischen der Stirnseite (13) und der Nut (9) vorgesehen sind.

6. Dichtring nach einem der Ansprüche 1 bis 5, bei dem der Dichtabschnitt eine Stirnseite und an seiner Außenseite eine umlaufende Nut hat, in der eine Ringfeder angeordnet ist, dadurch gekennzeichnet, daß der oder die Durchgänge (21, 21'; 22, 22') an der Stirnseite (13) vorgesehen sind.

7. Dichtring nach einem der Ansprüche 1 bis 6, bei dem der Dichtabschnitt in einen radial nach außen ragenden Boden übergeht, dadurch gekennzeichnet, daß der oder die Durchgänge (22, 22') im Bereich zwischen dem Boden (3) und der Nut (9) des Dichtabschnittes (4) vorgesehen sind.

8. Dichtring nach einem der Ansprüche 1 bis 7, dadurch gekennzeichnet, daß sich der oder die Durchgänge (21, 21'; 22, 22') in einem mittleren Bereich der Stirnseite (13) und/oder in einem mittleren Bereich zwischen der Ringnut (9) und dem Boden (3) erstrecken.

9. Dichtring nach einem der Ansprüche 1 bis 8, dadurch gekennzeichnet, daß die Erhebungen (17; 20; 26) zwischen einander benachbarten Durchgängen (18; 21, 21'; 22, 22') im Axialschnitt des Dichtringes teilkreisförmig abgerundet sind.

10. Dichtring nach einem der Ansprüche 1 bis 9, dadurch gekennzeichnet, daß die Tiefe des Durchganges (18; 21, 21'; 22, 22') kleiner als, vorzugsweise etwa halb so groß ist wie die Tiefe der Nut (9).

11. Dichtring nach einem der Ansprüche 1 bis 10, dadurch gekennzeichnet, daß die Profilierung (16) an einem die Nut (9) axial begrenzenden Ringabschnitt (15) des Dichtabschnittes (4) vorgesehen ist.

12. Dichtring nach einem der Ansprüche 1 bis 11, dadurch gekennzeichnet, daß die Profilierung (16) an die Stirnseite (13) anschließt und den umfangsseitigen Rand des Ringabschnittes (15) bildet.

13. Dichtring nach einem der Ansprüche 1 bis 12, dadurch gekennzeichnet, daß die Profilierung (19, 23) noppenförmige Erhebungen (20, 26) aufweist, zwischen denen die Durchgänge (21, 21'; 22, 22') gebildet sind.

Fig. 1

Fig. 2

Fig. 3